# EUROPÄISCHE PATENTSCHRIFT

(11) **EP 0 562 212 B1**
(45) Veröffentlichungstag und Bekanntmachung des Hinweises auf die Patenterteilung: **04.12.1996**
(21) Anmeldenummer: 92810222.7
(22) Anmeldetag: 25.03.1992
(51) Int. Cl.: G03D 13/00

(54) **Verfahren zur Erstellung eines langen Bands aus einer Vielzahl von kurzen Streifen eines fotografischen Bandmaterials**
Process for constructing a long film from a plurality of short strips of photographic film
Procédé pour produire un long film à partir d'une pluralité de rubans courts de film photographique

(43) Veröffentlichungstag der Anmeldung: 29.09.1993
(73) Patentinhaber: GRETAG IMAGING AG, CH-8105 Regensdorf (CH)
(72) Erfinder: Dietzsch, Claudius, Dr., CH-8135 Langnau a/Albis (CH)
(74) Vertreter: Kleewein, Walter, Dr.

(56) Entgegenhaltungen:
- DE-A- 529 934
- DE-A- 2 202 879
- DE-A- 2 345 676
- FR-A- 881 615
- US-A- 3 647 599

## Beschreibung

Die Erfindung betrifft ein Verfahren zur Erstellung eines langen Bands aus einer Vielzahl von kurzen Streifen eines fotografischen Bandmaterials gemäss dem Oberbegriff von Patentanspruch 1.

In den heutzutage existierenden stark automatisierten Fotolabors erfolgt das Erstellen von Papierbildern von entsprechenden Kopiervorlagen, z.B. von Negativfilmen, in der Regel stets in sogenannten Printern. Um eine möglichst hohe Effizienz dieser Printer zu erzielen, wird zunächst ein langes Band aus einzelnen Negativfilmstreifen mit Hilfe von Verbindungsmaterialien zusammengefügt und erst dieses lange Band wird vom Printer verarbeitet. Diese Technik des Zusammenfügens einzelner Negativfilmstreifen ist allgemein unter dem Begriff "Spleissen" bekannt.

Insbesondere bei Nachbestellungen von Filmen, die bereits zu einem früheren Zeitpunkt einmal entwickelt und dann an den Kunden zurückgegangen sind, liegen die Negativfilmstreifen nur noch in Form von kurzen Streifen vor, da sie nach dem ersten Entwickeln des Films in kurze Streifen geschnitten worden sind, um sie in den dem entsprechenden Kunden zugeordneten Umschlag hineinstecken zu können. Üblicherweise liegen die Filme dann in kurzen Streifen von vier, manchmal auch sechs, Bildfeldern vor. Noch ungeschnittene Filme weisen am Beginn und am Ende des Films in Längsrichtung betrachtet einen relativ breiten Bereich auf, in dem kein Bildfeld mehr vorhanden ist (Filmvorspann bzw. Nachspann), so dass hier sehr einfach und bequem ein Spleiss angebracht werden kann. Bei den geschnittenen kurzen Filmstreifen, wie sie bei Nachbestellungen auftreten, ist dies allerdings nicht einfach möglich, weil die Bereiche zwischen dem letzten bzw. dem ersten Bildfeld, also am hinteren Ende des vorderen und am vorderen Ende des hinteren Filmstreifens der zusammenzuspleissenden Filmstreifen, nur sehr schmal sind und oft nur 1-2 mm oder gar noch weniger betragen. Andererseits muss der Spleiss von einem entsprechenden Spleissdetektor einwandfrei erkennbar sein, da nach dem Erstellen der Papierbilder das lange Band wieder in einzelne kurze Filmstreifen zerlegt werden muss, um die einzelnen Filmstreifen wieder in den zu dem entsprechenden Kunden gehörigen Umschlag hineinstecken zu können.

Bei einem bekannten Verfahren erfolgt dieses Zusammenfügen der einzelnen Filmstreifen so, dass die Filmstreifen an ihrem einen Längsseitenrand mit Hilfe eines Klebestreifens mit einem parallel dazu angeordneten kontinuierlichen Trägerband, beispielsweise mit einem Papierstreifen, zu einem langen Trägerband-Filmstreifen-Band verbunden werden. Auf dem Papierstreifen kann beispielsweise in den einzelnen den Bildfeldern der Filmstreifen zugeordneten Feldern vermerkt werden, wieviele Papierbilder von dem jeweiligen Negativbildfeld erstellt werden sollen. Dieses zusammengefügte Trägerband-Filmstreifen-Band wird dann vom Printer verarbeitet.

Weiterhin ist in der US-A-4,468,268 ein Verfahren zum Spleissen von Filmen, wie sie in Kinos zur Anwendung kommen, vorgeschlagen. Dort werden die Kanten der zu verspleissenden Filmenden zunächst etwa senkrecht zu den Längsrändern abgeschnitten. Anschliessend wird bei beiden zu verspleissenden Filmteilen in einem schmalen Endbereich eine dünne Schicht des Filmmaterials abgekratzt, zum Beispiel mit einer Rasierklinge. Auf diese freigekratzten Flächen wird Klebstoff aufgetragen. Die Endkanten der Filmteile liegen dabei bündig aneinander. Dann wird ein Verbindungssteg, der sich über die freigekratzten und mit Klebstoff bestrichenen Flächen ersteckt, aufgeklebt und festgedrückt oder festgepresst, so dass der Verbindungssteg (Spleiss) die beiden Enden der Filmteile quasi miteinander verbindet.

Beide Verfahren sind zwar prinzipiell zum Verbinden von solchen kurzen Filmstreifen, wie sie bei Nachbestellungen vorliegen, geeignet, weisen aber Nachteile auf. Nachteilig bei dem zuerst beschriebenen Spleissverfahren mit dem zusätzlichen Trägerband ist, dass überhaupt ein relativ grosses zusätzliches Trägerband erforderlich ist, was erhöhten Aufwand bedeutet. Weiterhin nachteilig ist auch, dass das daraus entstehende Trägerband-Filmstreifen-Band sehr viel breiter und schlechter handhabbar ist als ein im Vergleich dazu schmales Filmband. Insbesondere die Transportstrecken, Führungen und Arbeitsstationen müssen dann für ein entsprechend breites Trägerband-Filmstreifen-Band ausgelegt sein, was entprechende räumliche Anforderungen an die einzelnen Stationen im Printer und in eventuell dem Printer nachgeschalteten Geräten stellt. Ausserdem muss auch darauf geachtet werden, dass das Trägerband und die Filmstreifen parallel zueinander verlaufend miteinander verbunden werden und die Längsränder der einzelnen Filmstreifen fluchtend hintereinander folgen, damit die Breite des Trägerband-Filmstreifen-Bands im wesentlichen gleich bleibt und nicht in weiten Bereichen schwankt, da sonst die Transportstrecken, Führungen und Arbeitsstationen ebenfalls für solche Schwankungen der Breite ausgelegt sein müssen. Dies ist insbesondere wichtig im Hinblick darauf, dass in der Belichtungsstation eine genaue Position des Filmmaterials notwendig ist, damit eine korrektes Aufkopieren des jeweiligen Bildfelds des Negativfilms auf das Kopiermaterial gewährleistet ist.

Bei dem anderen beschriebenen Verfahren ist nachteilig, dass zunächst ein aufwendiges Freikratzen der Flächen erfolgen muss, auf die der Klebstoff aufgetragen wird. Ebenso muss anschliessend in einem gesonderten Arbeitsschritt der Klebstoffauftrag erfolgen. Erst dann können die freigekratzten und mit Klebstoff versehenen Flächen durch das Verbindungsstück (Spleiss), das auf beide Flächen aufgeklebt wird, miteinander verbunden werden. Für ein derartiges Spleissen ist allerdings Voraussetzung, dass an den zu verspleissenden Filmenden zwischen der vorderen Kante und dem ersten Bildfeld bzw. zwischen der hinteren Kante und dem letzten Bildfeld eine genügend breite Fläche zur Verfügung steht. Diese Fläche muss definiert angeschnitten sein (senkrecht zum Längsrand des Films), wobei eine genügend grosse Fläche zum Freikratzen, Klebstoffauftragen, und zum Aufbringen des Spleisses übrig sein muss. Bei der Nachbestellung von Filmen (deren vordere und hintere Endfläche bereits definiert angeschnitten sind) ist an den Enden der einzelnen Filmstreifen in der Regel nur noch eine 1-2 mm breite Fläche bis zur Kante übrig, oft ist diese Fläche sogar noch schmaler, was das Aufbringen von Spleissen nach dem beschriebenen Verfahren erschwert. Selbst unter der Annahme, dass das Aufbringen eines Spleisses überhaupt zuverlässig möglich ist, hat eine derartige Verspleissung von Filmen oder Filmstreifen immer noch erhebliche Nachteile.

So ist es je nach Art des verwendeten Klebstoffs entweder nur unter sehr grossem Aufwand oder gar nicht mehr möglich, den Spleiss nach der Verarbeitung wieder zu lösen, was aber bei Nachbestellungen insofern von Wichtigkeit ist, als nach der Erstellung der Papierbilder der Film wieder in einzelne Streifen zerlegt werden muss, um diese Streifen in den zum entsprechenden Kundenauftrag gehörenden Umschlag hineinstecken zu können. Ein weiterer Nachteil ergibt sich daraus, dass im Zuge einer immer weiter fortschreitenden Verkleinerung der modernen Printer infolge des Platzmangels in Fotolabors der Innenraum der modernen Printer besser genutzt wird. Zu diesem Zweck werden die gespleissten zu verarbeitenden Bänder im Innenraum des Printers über zahlreiche Rollen geführt und umgelenkt. Oft werden die Bänder dabei über Rollen sehr kleinen Durchmessers, beispielsweise über Rollen mit einem Durchmesser von 15 mm oder weniger geführt und um 180° umgelenkt (z.B. Aufwärts- und Abwärtsführen des Bands). Ist der Spleiss dann in der beschriebenen Art und Weise über die gesamte Filmbreite an beiden Filmenden befestigt, so können beim Transport des Bands gerade bei Rollen kleinen Durchmessers und bei grossen Richtungsänderungen (Umlenkungen) des Bands erhebliche Schwierigkeiten auftreten. Beispielsweise kann es zu Knicken kommen, wenn der Spleiss sehr stark beansprucht wird, oder der schmale Spleiss kann an einer Klebestelle aufbrechen oder reissen. Ein störungsfreier und sicherer Transport des Bands kann bei dieser Art der Verspleissung jedenfalls nicht immer gewährleistet werden, besonders dann nicht, wenn das Band über Rollen Kleinen Durchmessers geführt ist, und starke Richtungsänderungen erfährt (Umlenkungen), wie dies in modernen Printern der Fall ist, ganz abgesehen von dem doch recht erheblichen Aufwand für eine solche Verspleissung.

Ein weiterer Nachteil von auf diese Art und Weise miteinander verspleisster Filmstreifen ergibt sich aus der Tatsache, dass die nach herkömmlichen Methoden zum Band zusammengefügten Filmstreifen knicken können. Dies ist nachteilig im Hinblick darauf, dass in modernen Printern und anderen filmverarbeitenden Geräten oft sogenannte "Ausgleichsschlaufen" gebildet werden, die zur Überbrückung von Schwankungen der Geschwindigkeiten der einzelnen Arbeitsstationen dienen. Kommt es bei der Bildung solcher Ausgleichsschlaufen zu Knicken im Band, so können sich als Folge von derartigen Knicken einzelne Filmstreifen miteinander verhaken und können so eine Unterbrechung des Printerbetriebs notwendig machen.

Es ist daher eine Aufgabe der Erfindung, eine möglichst wenig aufwendige und gleichzeitig sichere Verbindung von Filmstreifen zu einem langen Band zu erreichen, insbesondere von solch kurzen Filmstreifen, wie sie bei Nachbestellungen vorliegen. Insbesondere sollen also auch solche Streifen problemlos zusammengefügt werden können, die zwischen dem letzten Bildfeld und der hinteren Kante bzw. zwischen dem ersten Bildfeld und der vorderen Kante des Streifens nur noch eine Filmmaterialfläche sehr geringer Breite aufweisen. Gleichzeitig sollen die zum Band zusammengefügten Filmstreifen möglichst einfach handhabbar sein und nicht unnötigerweise Platz beanspruchen. Ausserdem sollen die Bänder über Rollen sehr Kleinen Durchmessers geführt und umgelenkt werden können, ohne dass die Sicherheit beim Transport des Bands dabei beeinträchtigt wird. Weiterhin soll die Verbindung nach der Verarbeitung des Bands auch einfach wieder gelöst bzw. entfernt werden können. Ausserdem soll ein Verknicken des Filmbands, wie es insbesondere bei der Bildung von Ausgleichsschlaufen vorkommen kann, vermieden werden.

Diese Aufgabe wird erfindungsgemäss dadurch gelöst, dass ein Doppel-T-Stück mit im wesentlichen gleicher Biegesteifigkeit wie das zu verbindende Bandmaterial als Zwischenstück zwischen die Enden der zusammenzufügenden Streifen eingefügt wird und die beiden etwa parallel zueinander verlaufenden Schenkel des Doppel-T-Stücks jeweils nur im Längsrandbereich der Bandmaterialstreifen und etwa parallel zum Längsrand befestigt werden und der diese beiden Schenkel zum Doppel-T-Stück ergänzende Verbindungssteg etwa bündig und parallel mit den jeweiligen Endkanten der Streifen verläuft. Dadurch wird einerseits eine sichere Verbindung der Streifen erreicht, andererseits bleibt die Breite des so erzeugten Bands auf die Breite der Filmstreifen beschränkt, so dass das Band gut handhabbar ist und nicht unnötigerweise Platz beansprucht. Da die Doppel-T-Stücke nur im Längsrandbereich befestigt werden, können auch problemlos solche Streifen zusammengefügt werden, die zwischen dem letzten Bildfeld und der hinteren Kante bzw. zwischen dem ersten Bildfeld und der vorderen Kante des Streifens nur noch eine Filmmaterialfläche sehr geringer Breite aufweisen. Ausserdem bleibt so das zusammengefügte Band sehr flexibel und kann insbesondere auch über Rollen sehr Kleinen Durchmessers geführt und umgelenkt werden, ohne dass die Sicherheit beim Transport des Bands beeinträchtigt wird. Dies wird auch dadurch unterstützt, dass die Biegesteifigkeit des Verbindungsstücks etwa gleich ist wie die Biegesteifigkeit des Materials der einzelnen kurzen Streifen. Durch das bündige Abschliessen des Verbindungsstegs des Doppel-T-Stücks mit den jeweiligen Endkanten der Streifen wird quasi ein durchgehendes Band erzeugt. Durch diese Art der Verbindung der einzelnen Streifen wird auch ein Knicken des Bands, insbesondere bei der Bildung von Ausgleichsschlaufen, vermieden. Da das Doppel-T-Stück nur in den Längsrandbereichen und nicht über die gesamte Breite der Filmstreifen befestigt wird, können die Verbindungen auch ohne grossen Aufwand nach der Bearbeitung des Bands wieder getrennt werden. Ausserdem ist auch eine einfache Detektion (z.B. optische Detektion) des Verbindungsstücks möglich, was hinsichtlich des Trennens der Verbindungen nach der Bearbeitung des Bands wichtig ist.

Bei einer besonders vorteilhaften Verfahrensvariante wird ein Doppel-T-Stück mit einer Breite des Verbindungsstegs von etwa 4 mm bis etwa 6 mm und mit einer Länge der parallel zueinander verlaufenden Schenkel von etwa 15 mm bis etwa 25 mm und einer Breite von etwa 3 mm bis etwa 5 mm eingefügt, insbesondere mit einer Breite des Verbindungsstegs von etwa 5 mm sowie einer Länge der Schenkel von etwa 20 mm und einer Breite von etwa 4 mm. Derartige Doppel-T-Stücke haben sich als besonders geeignet erwiesen, insbesondere im Hinblick auf die Umlenkung über Rollen sehr kleinen Durchmessers, wie sie in modernen Printern vorkommen.

Bei Ausgestaltung des erfindungsgemässen Verfahrens werden die parallel zum Längsrand der Streifen verlaufenden Schenkel des Doppel-T-Stücks durch Verkleben mit den Längsrandbereichen der Streifen an diesen befestigt. Dies ist vom Aufwand her betrachtet sehr einfach und ermöglicht nach der Bearbeitung eine besonders einfache Trennung der Verbindungen, so dass die einzelnen kurzen Streifen wieder in den zu dem entsprechenden Kundenauftrag gehörenden Umschlag hineingesteckt werden können.

Dies kann beispielsweise so realisiert werden, dass die Schenkel des Doppel-T-Stücks mit Hilfe von durchgehenden über die Längsrandbereiche geführten Klebebändern überklebt und so an den Längsrandbereichen befestigt werden, was vom Aufwand her betrachtet besonders einfach und gleichzeitig zuverlässig ist.

Eine besonders sichere Befestigung der Schenkel des Doppel-T-Stücks kann dadurch erzielt werden, dass zu beiden Seiten der durch die Streifen definierten Bandebene die Längsrandbereiche nach dem Einfügen des Zwischenstücks mit den Klebebändern überklebt werden.

Bei einer weiteren Variante des erfindungsgemässen Verfahrens werden die Streifen nur mit lichttransparenten Verbindungsmaterialien verbunden werden, insbesondere wird ein lichttransparentes Doppel-T-Stück eingefügt und dieses mit lichttransparenten Klebebändern an den Längsrandbereichen der Streifen befestigt. Dadurch kann der bei vielen Filmen auf den Längsrandbereichen aufgebrachte DX-Code detektiert und automatisch gelesen werden.

Eine weitere Variante des Verfahrens zeichnet sich dadurch aus, dass die parallel zum Längsrand der Streifen verlaufenden Schenkel des Doppel-T-Stücks durch Ultraschall-Verschweissen mit den Längsrandbereichen der Streifen an diesen befestigt werden. Diese Art und Weise der Befestigung der Schenkel des Doppel-T-Stücks an den Längsrandbereichen der Filmstreifen hat sich ebenfalls als zuverlässig erwiesen.

Im folgenden wird die Erfindung anhand der Zeichnung näher erläutert Es zeigen zum Teil schematisch:
- Fig. 1: Eine Darstellung, wie gemäss der Erfindung die Endbereiche zweier miteinander zu verbindenden Filmstreifen mit Hilfe eines zwischen die Enden eingefügten DoppelT-Verbindungsstücks verbunden werden können,
- Fig. 2: eine Ausführungsvariante, wie die Doppel-T-Stücke bereitgestellt werden können,
- Fig. 3: eine Ausführungsvariante, wie die Doppel-T-Stücke zwischen die Enden der Filmstreifen eingefügt werden können,
- Fig. 4: eine Ausführungsvariante, wie die Doppel-T-Stücke mit Hilfe eines durchgehenden Klebebands zu beiden Seiten der Filmstreifen am Längsrand der Filmstreifen befestigt werden können,
und
- Fig. 5: die miteinander verbundenen Enden zweier Filmstreifen.

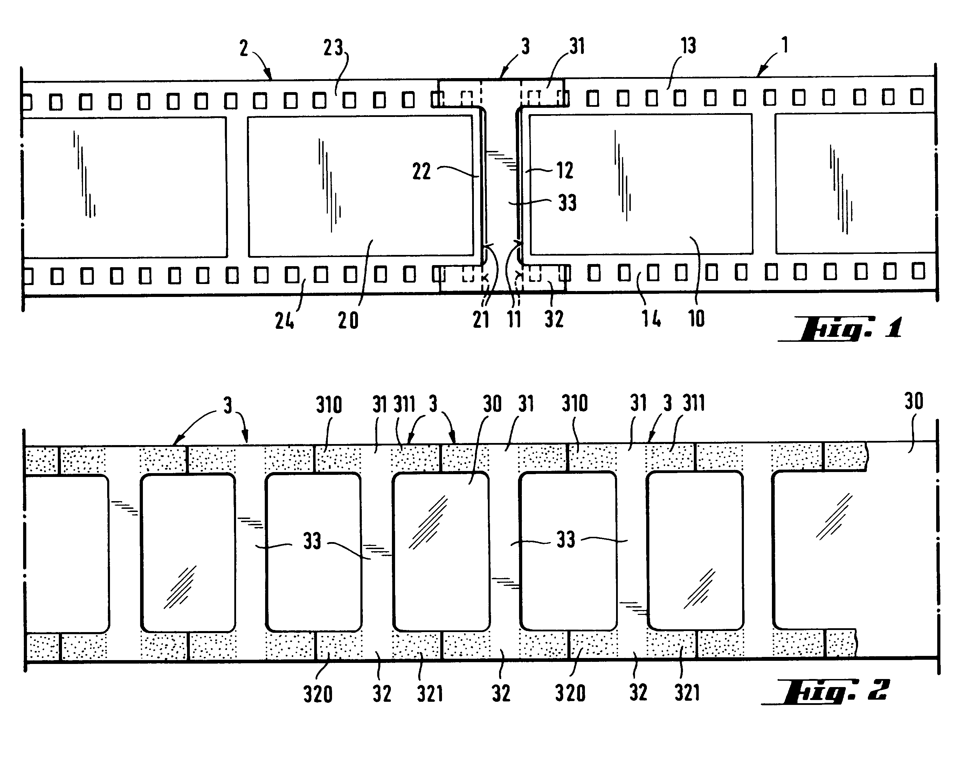

In Fig. 1 sind die Enden zweier kurzer Filmstreifen 1 und 2 zu erkennen, die miteinander verbunden ("verspleisst") werden sollen. Die Filmstreifen 1 und 2 sind dabei an ihrem vorderen und hinteren Ende angeschnitten, so dass die Endkanten der einzelnen Filmstreifen, von denen hier die Endkanten 11 und 21 dargestellt sind, etwa senkrecht zum Längsrand der Streifen verlaufen. Es ist ersichtlich, dass zwischen dem letzten Bildfeld 10 des ersten Filmstreifens 1 und der Endkante 11 dieses Filmstreifens 1 bzw. zwischen dem ersten Bildfeld 20 des zweiten Filmstreifens 2 und der Endkante 21 dieses Filmstreifens 2 nur ein sehr schmaler Steg 12 bzw. 22 an Filmmaterial vorhanden ist, wie dies bei Filmstreifen, die für Nachbestellungen im Fotolabor eintreffen, durchaus üblich ist. Weiterhin ist in Fig. 1 ein DoppelTVerbindungsstück 3 zu erkennen, das eine im wesentlichen gleiche Biegesteifigkeit aufweist wie die beiden zu verbindenden Filmstreifen 1 und 2. Dieses DoppelTStück 3 wird in noch zu erläuternder Weise zwischen die Enden der Filmstreifen 1 und 2 eingefügt. Dabei erstrecken sich die beiden zu einander parallelen verlaufenden Schenkel 31 und 32 des DoppelTStücks 3 jeweils nur über den perforierten Längsrandbereich 13 und 14 bzw. 23 und 24, wo sie auch befestigt werden. Der Verbindungssteg 33 des Doppel-T-Stücks 3 hingegen verläuft etwa bündig mit den Endkanten 11 bzw. 21 der beiden Filmstreifen 1 und 2.

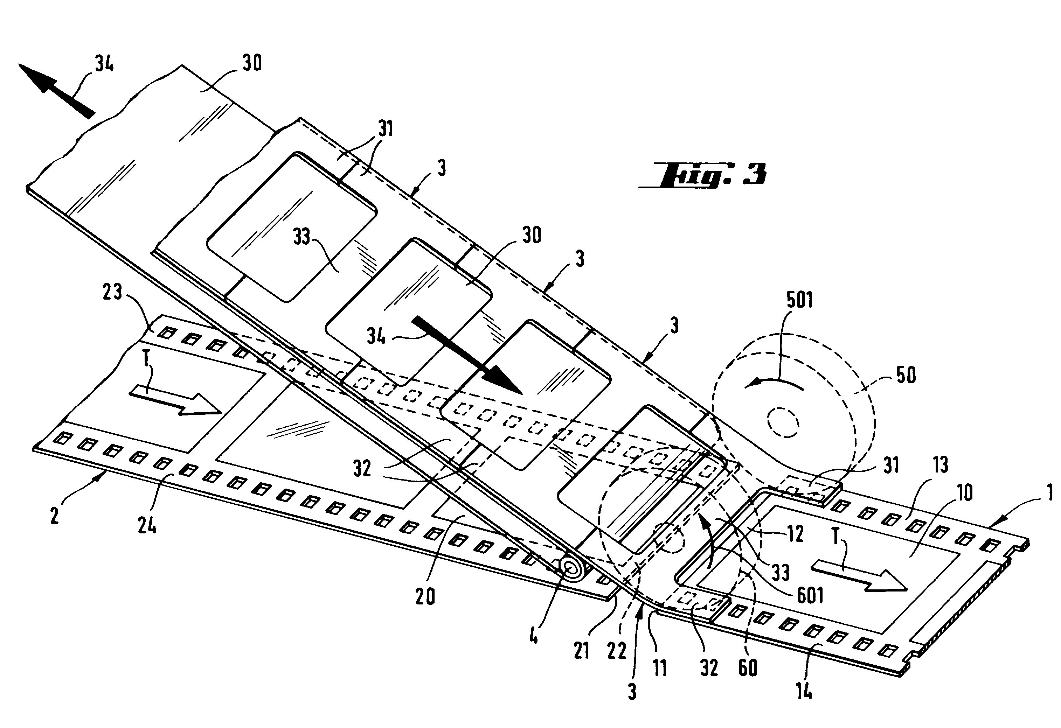

Wie die Doppel-T-Stücke 3 bereitgestellt werden können, ist aus Fig. 2 ersichtlich. Dort ist ein Streifen 30 erkennbar, beispielsweise ein Silikonpapierstreifen, auf dem viele einzelne selbstklebende Doppel-T-Stücke 3 aufeinanderfolgend kleben, wobei diese Klebeverbindung mit dem Silikonpapierstreifen 30 ähnlich wie bei der Bereitstellung von Lochrandverstärkungsringen relativ leicht lösbar ist, insbesondere durch entsprechendes Verbiegen des Silikonpapiers. Man erkennt aus Fig. 2, dass bei dieser Ausführungsvariante die Schenkel 31 und 32 nur in den Bereichen 310,311,320 und 321 mit Klebstoff versehen sind, in denen sie in den Längsrandbereichen 13,14,23 und 24 an den Filmstreifen 1 und 2 angeklebt werden sollen.

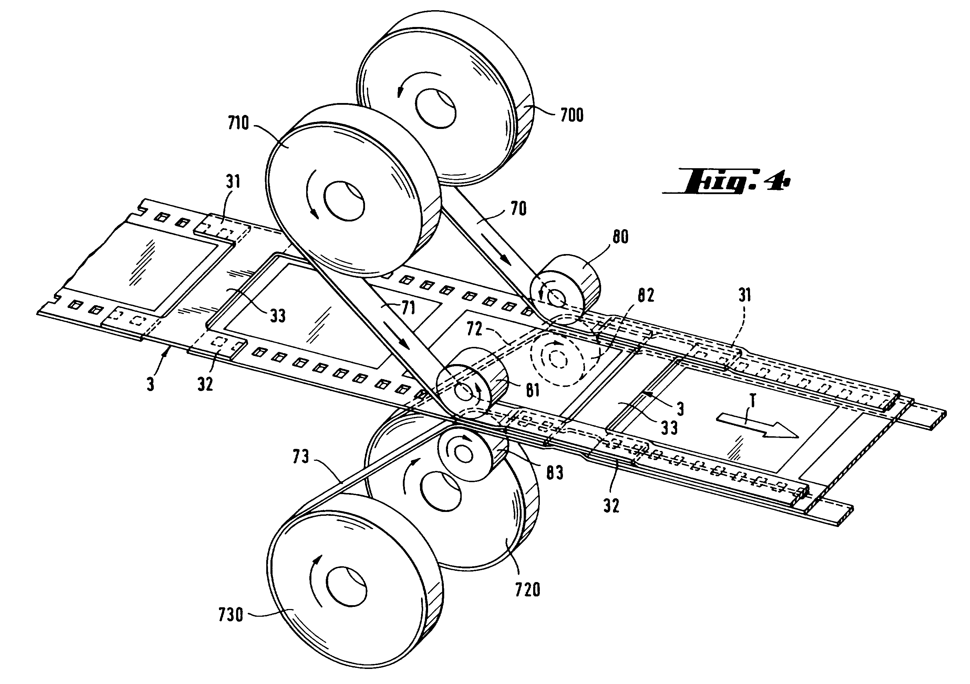

Aus Fig. 3 ist eine Möglichkeit ersichtlich, wie die einzelnen Doppel-T-Stücke 3 zwischen die Filmstreifen 1 und 2 eingefügt werden können. Dabei wird der Silikonpapierstreifen 30 über eine Umlenkwelle 4 in Richtung der Pfeile 34 geführt. Man erkennt, dass die einzelnen Doppel-T-Stücke 3 ähnlich wie beim Abstreifen von Lochrandverstärkungsringen einfach durch das Umlenken des Silikonpapierstreifens 30 von diesem abgestreift werden und auf die Längsrandbereiche 13,14,23 und 24 der Filmstreifen 1 und 2 gelangen, wo sie zunächst leicht anhaften bzw. mit Hilfe von strichliert angedeuteten Andruckwalzen 50 und 60 an die Längsrandbereiche angepresst werden können. Diese Andruckwalzen 50 und 60 können gleichzeitig auch zum Transport der zu einem Band zusammengefügten einzelnen Filmstreifen verwendet werden. Zu diesem Zweck können die Andruckwalzen so angetrieben werden, dass sie sich beispielsweise in Richtung der Pfeile 501 bzw. 601 drehen und das Filmband in Richtung des Pfeils T transportieren.

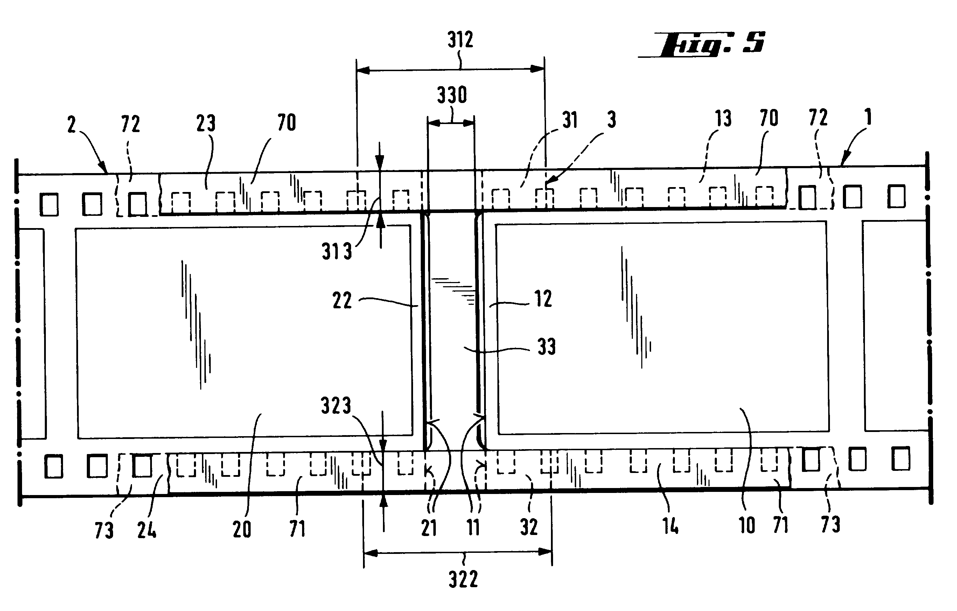

Fig. 4 zeigt eine Ausführungsvariante, bei der nach dem Einfügen der Doppel-T-Stücke 3 die Doppel-T-Stücke 3 zu beiden Seiten der Filmstreifen mit jeweils durchgehenden Klebebändern 70 und 71 bzw. 72 und 73 mit den perforierten Längsrandbereichen 13,14 bzw. 23,24 der Filmstreifen 1 und 2 verklebt werden. Dies kann so erfolgen, wie es in Fig. 4 angedeutet ist: Von drehbar gelagerten Vorratsrollen 700,710,720 und 730 werden beispielsweise mit Hilfe von Andruckwalzen 80,81,82 und 83 die durchgehenden Klebebänder 70,71,72 und 73 von den Vorratsrollen abgerollt und über die gesamten Längsrandbereiche der Filmstreifen geklebt, insbesondere auch über die Schenkel 31 und 32 der bereits zuvor eingefügten Doppel-T-Stücke 3, so dass diese nun zuverlässig die einzelnen Filmstreifen zu einem Band aus einzelnen Filmstreifen und Verbindungsmaterial verbinden. Gleichzeitig können natürlich auch diese Andruckwalzen 80,81,82 und 83 zum Transportieren des Bands in Richtung des Pfeils T verwendet werden. Das auf diese Weise erzeugte Band ist zuverlässig verklebt und kann auch über Umlenkrollen kleineren Durchmessers geführt werden, wie sie in modernen Printern vorkommen. Weiterhin ist die auf diese Weise erzeugte Verbindung der einzelnen Filme zu einem Filmstreifen relativ einfach wieder zu lösen, nämlich durch Abziehen (ggf. automatisch) der Klebebänder und gegebenenfalls anschliessendes Entfernen der Doppel-T-Stücke, sofern die Doppel-T-Stücke 3 beim Abziehen der Klebebänder nicht ohnehin mit abgezogen werden. Selbstverständlich ist es auch denkbar, immer nur bestimmte Teile der Längsrandbereiche mit Klebebändern zu überkleben, so dass die Doppel-T-Stücke 3 in jedem Fall sicher überklebt und an den Filmstreifen befestigt sind, andererseits aber gleichzeitig Klebeband eingespart werden kann.

Die Enden zweier bereits miteinander verklebter Filmstreifen sind in Fig. 5 dargestellt. Man erkennt das eingefügte Doppel-T-Stück 3 zwischen den Filmstreifen 1 und 2 sowie die darüber klebenden durchgehenden Klebebänder 70 und 71. Als geeignetes Material für derartige Verbindungsstücke erweist sich ein Material etwa gleicher Biegesteifigkeit wie die der Filmstreifen. Insbesondere eignet sich daher ein dem Filmmaterial ähnliches oder gleiches Material, beispielsweise ein Zelluloseester. Besonders geeignete Abmessungen für derartige Doppel-T-Stücke betragen beispielsweise für die Länge 312 bzw. 322 der parallel zueinander verlaufenden Schenkel 31 bzw. 32 etwa 15 mm bis etwa 25 mm, insbesondere etwa 20 mm und für die Breite 330 des Verbindungsstegs 33 etwa 4 mm bis etwa 6 mm, insbesondere etwa 5 mm. Die Breite 313 bzw. 323 dieser Schenkel 31 bzw. 32 beträgt vorzugsweise etwa 3 mm bis etwa 5 mm, insbesondere etwa 4 mm. Ausserdem ist noch eine weitere vorteilhafte Eigenschaft der Verbindungsmaterialien aus Fig. 5 erkennbar: Die Materialien sind lichttransparent, was sehr vorteilhaft im Hinblick darauf ist, dass dann der DX-Code, der im Längsrandbereich der Filme aufgebracht ist, nach wie vor automatisch gelesen werden kann.

An dieser Stelle soll ausdrücklich bemerkt werden, dass die Art und Weise, wie die Doppel-T-Stücke 3 an den Längsrandbereichen der Filmstreifen befestigt werden, natürlich nicht auf Klebeverfahren beschränkt ist. Ebensogut können andere geeignete Verbindungstechniken, insbesondere das Ultraschallverschweissen, zum Einsatz kommen, so dass das Klebeband völlig überflüssig wird und das Doppel-T-Stuck 3 jeweils direkt mit den Filmstreifen in deren Längsrandbereich verschweisst wird. Ebenso ist es denkbar, dass Doppel-T-Stück und die Filmstreifen durch sogenanntes "Heiss-Siegeln" miteinander zu verbinden. Dazu ist es erforderlich, dass sowohl die Filmstreifen als auch das Doppel-T-Stück mit einer Beschichtung versehen ist, die bei einer niedrigeren Temperatur aufschmilzt als das Filmmaterial selbst, so dass die Streifen und dass Doppel-T-Stück miteinander verbunden werden können, ohne dass das Filmmaterial beschädigt wird.

Die Vorteile der anhand der Figuren beschriebenen Ausführungsvariante des erfindungsgemässen Verfahrens sind ersichtlich: Es wird einerseits eine sichere Verbindung der Streifen erreicht, andererseits bleibt die Breite des so erzeugten Bands auf die Breite der Filmstreifen beschränkt, so dass das Band gut handhabbar ist und nicht unnötigerweise Platz beansprucht. Da die Doppel-T-Stücke nur im Längsrandbereich befestigt werden, können auch problemlos solche Streifen zusammengefügt werden, die zwischen dem letzten Bildfeld und der hinteren Kante bzw. zwischen dem ersten Bildfeld und der vorderen Kante des Streifens nur noch eine Filmmaterialfläche sehr geringer Breite aufweisen. Ausserdem weist das zusammengefügte Band eine gleichmässige Biegesteifigkeit auch über den Spleiss hinweg auf und kann insbesondere auch über Rollen sehr kleinen Durchmessers geführt und umgelenkt werden, ohne dass die Sicherheit beim Transport des Bands beeinträchtigt wird. Dies wird dadurch erreicht, dass die Biegesteifigkeit des Verbindungsstücks etwa gleich ist wie die Biegesteifigkeit des Materials der einzelnen kurzen Streifen. Weiterhin wird durch diese Art der Verbindung der einzelnen Streifen vermieden, dass es zu Knicken des zusammengefügten Bands kommen kann, insbesondere werden solche Knicke auch im Bereich von Ausgleichsschlaufen vermieden. Durch das bündige Abschliessen des Verbindungsstegs des Doppel-T-Stücks mit den jeweiligen Endkanten der Streifen wird quasi ein durchgehendes knickfreies und gleichmässig biegsames Band erzeugt. Da das Doppel-T-Stück nur in den Längsrandbereichen und nicht über die gesamte Breite der Filmstreifen befestigt wird, können die Verbindungen auch ohne grossen Aufwand nach der Bearbeitung des Bands wieder getrennt werden. Ausserdem ist auch eine einfache Detektion (z.B. optische Detektion) des Verbindungsstücks ("Spleiss") möglich, was hinsichtlich des Trennens der Verbindungen bzw. hinsichtlich Zuordnung der Filmstreifen zum zugehörigen Kundenauftrag nach der Bearbeitung des Bands wichtig ist. Mit Hilfe von lichttransparenten Verbindungsmaterialien ist ausserdem ein automatisches Lesen des DX-Codes nach wie vor möglich.

## Patentansprüche

1. Verfahren zur Erstellung eines langen Bandes aus einer Vielzahl von kurzen Streifen (1,2) eines fotografischen Bandmaterials, bei welchem Verfahren die einzelnen kurzen Streifen an ihrem vorderen und hinteren Ende etwa senkrecht zu ihrem Längsrand angeschnitten sind, so dass die vordere und hintere Endkante (11,21) der einzelnen Streifen etwa senkrecht zum Längsrand des Streifens verlaufen, und bei welchem Verfahren diese Streifen jeweils mit Hilfe von Verbindungsmaterialien zu einem langen Band aus fotografischem Bandmaterial und Verbindungsmaterial zusammengefügt werden, wobei beim Zusammenfügen der einzelnen Streifen jeweils der hintere Endbereich (12) des vorangehenden Streifens (1) und der vordere Endbereich (22) des nachfolgenden anzufügenden Streifens durch ein Verbindungsstück miteinander verbunden werden, welches an den Endbereichen der Streifen befestigt wird, dadurch gekennzeichnet, dass ein Doppel-T-Stück (3) mit im wesentlichen gleicher Biegesteifigkeit wie das zu verbindende Bandmaterial als Zwischenstück zwischen die Enden der Streifen (1,2) eingefügt wird, wobei die beiden etwa parallel zueinander verlaufenden Schenkel (31,32) des Doppel-T-Stücks (3) jeweils nur im Längsrandbereich (13,14,23,24 der Bandmaterialstreifen (1,2) und etwa parallel zum Längsrand befestigt werden und der diese beiden Schenkel (31,32) zum Doppel-T-Stück (3) ergänzende Verbindungssteg (33) etwa bündig und parallel mit den jeweiligen Endkanten (11,21) der Streifen (1,2) verläuft.

2. Verfahren nach Anspruch 1, dadurch gekennzeichnet, dass ein Doppel-T-Stück (3) mit einer Breite (330) des Verbindungsstegs (33) von etwa 4 mm bis etwa 6 mm und mit einer Länge (312,322) der parallel zueinander verlaufenden Schenkel (31,32) von etwa 15 mm bis etwa 25 mm und einer Breite (313,323) von etwa 3 mm bis etwa 5 mm eingefügt wird, insbesondere mit einer Breite (330) des Verbindungsstegs (33) von etwa 5 mm sowie einer Länge (312,322) der Schenkel (31,32) von etwa 20 mm und einer Breite (313,323) dieser Schenkel (31,32) von etwa 4 mm.

3. Verfahren nach einem der Ansprüche 1 oder 2, dadurch gekennzeichnet, dass die parallel zum Längsrand der Streifen (1,2) verlaufenden Schenkel (31,32) des Doppel-T-Stücks (3) durch Verkleben mit den Längsrandbereichen (13,14,23,24) der Streifen (1,2) an diesen befestigt werden.

4. Verfahren nach einem der Ansprüche 1 bis 3, dadurch gekennzeichnet, dass die Schenkel (31,32) des Doppel-T-Stücks (3) mit Hilfe von über die Längsrandbereiche (13,14,23,24) geführten Klebebändern (70,71,72,73) überklebt und so an den Längsrandbereichen befestigt werden.

5. Verfahren nach Anspruch 4, dadurch gekennzeichnet, dass auf beiden Seiten der durch die Streifen (1,2) definierten Bandebene die Längsrandbereiche (13,14,23,24) nach dem Einfügen des Zwischenstücks (3) mit Klebebändern (70,71,72,73) überklebt werden.

6. Verfahren nach einem der Ansprüche 1 bis 5, dadurch gekennzeichnet, dass die Streifen (1,2) nur mit lichttransparenten Verbindungsmaterialien verbunden werden, insbesondere dass ein lichttransparentes Doppel-T-Stück (3) eingefügt und dieses mit lichttransparenten Klebebändern (70,71,72,73) an den Längsrandbereichen der Streifen befestigt wird.

7. Verfahren nach einem der Ansprüche 1 oder 2, dadurch gekennzeichnet, dass die parallel zum Längsrand der Streifen verlaufenden Schenkel (31,32) des Doppel-T-Stücks (3) durch Ultraschall-Verschweissen mit den Längsrandbereichen (13,14,23,24) der Streifen (1,2) an diesen befestigt werden.

## Claims

1. A process for producing a long band from a number of short strips (1,2) of photographic band material, wherein at their front and rear ends the individual short strips are cut approximately perpendicular to their longitudinal edge, with the result that the front and rear end edges (11,21) of the individual strips are approximately perpendicular to the longitudinal edge of the strip, and wherein those strips are connected with the aid of connecting materials to form a long band of photographic band material and connecting material; in which, when the individual strips are connected, the rear end region (12) of the preceding strip (1) and the front end region (22) of the following strip to be connected are connected to one another by a connecting piece which is secured to the end areas of the strips, which method comprises inserting a double T-joint (3) having essentially the same bending stiffness as the band material to be connected as a connecting piece between the ends of the strips (1,2), the two approximately parallel shanks (31,32) of the double T-joint (3) being secured only in the longitudinal edge area (13,14,23,24) of the strips (1,2) of band material and approximately parallel to the longitudinal edge and the connecting bar (33) that forms the double T-joint (3) with those two shanks (31,32) extending approximately flush with and parallel to the end edges (11,21) of the strips (1,2).

2. A process according to claim 1, wherein a double T-joint (3) is inserted, the connecting bar (33) of which has a width (330) of about 4 mm to about 6 mm and the parallel shanks (31,32) of which have a length (312,322) of about 15 mm to about 25 mm and a width (313,323) of about 3 mm to about 5 mm, the width (330) of the connecting bar (33) being especially about 5 mm, the length (312,322) of the shanks (31,32) being especially about 20 mm and the width (313,323) of the shanks (31,32) being especially about 4 mm.

3. A process according to either claim 1 or claim 2, wherein the shanks (31,32) of the double T-joint (3) that are parallel to the longitudinal edge of the strips (1,2) are secured to the longitudinal edge areas (13,14,23,24) of the strips (1,2) adhesively.

4. A process according to any one of claims 1 to 3, wherein the shanks (31,32) of the double T-joint (3) are taped with adhesive tape (70,71,72,73) guided across the longitudinal edge areas (13,14,23,24) and are thus secured to the longitudinal edge areas.

5. A process according to claim 4, which comprises taping the longitudinal edge areas (13,14,23,24) with adhesive tape (70,71,72,73) on both sides of the plane of the band defined by the strips (1,2) after the connecting piece (3) has been inserted.

6. A process according to any one of claims I to 5, which comprises connecting the strips (1,2) only with light-transparent connecting materials, especially inserting a light-transparent double T-joint (3) and securing the latter to the longitudinal edge areas of the strips with light-transparent adhesive tape (70,71,72,73).

7. A process according to either claim 1 or claim 2, wherein the shanks (31,32) of the double T-joint (3) that are parallel to the longitudinal edge of the strips are secured to the longitudinal edge areas (13,14,23,24) of the strips (1,2) by ultrasonic welding.

## Revendications

1. Procédé de production d'une longue bande constituée d'une pluralité de courts rubans (1, 2) d'un matériau photographique en bande, procédé dans lequel les différents rubans courts sont coupés à longueur à leur extrémité avant et à leur extrémité arrière, à peu près perpendiculairement à leur bordure longitudinale, de façon que l'arête d'extrémité avant et l'arête d'extrémité arrière (11, 21) des différents rubans soient à peu près orientées perpendiculairement à la bordure longitudinale du ruban, et procédé dans lequel on réunit chacun de ces rubans, à l'aide de matériaux de liaison, pour obtenir une longue bande constituée de matériau photographique en bande et du matériau de liaison, procédé dans lequel, lors de la réunion des différents rubans, on réunit ensemble la zone d'extrémité arrière (12) du ruban précédent (1) et la zone d'extrémité avant (22) du ruban suivant, à réunir, au moyen d'un élément de liaison que l'on fixe aux zones d'extrémité des rubans, caractérisé par le fait que l'on insère, comme élément intermédiaire entre les extrémités des rubans (1,2), un élément en double T (3) présentant une rigidité en flexion sensiblement égale à celle du matériau en bande à relier, les deux ailes (31,32), orientées à peu près parallèlement l'une à l'autre, de l'élément en double T (3) n'étant chacune fixées que dans la zone de bordure longitudinale (13,14,23,24) des rubans (1,2) de matériau en bande et à peu près parallèlement à la bordure longitudinale et la barrette de liaison (33) qui complète ces deux ailes (31,32) pour donner l'élément en double T (3) venant à peu près à l'affleurement, orientée parallèlement aux arêtes d'extrémité respectives (11,21) des rubans (1,2).

2. Procédé selon la revendication 1, caractérisé par le fait que l'on insère un élément en double T (3) d'une largeur (330) de la barrette de liaison (33) d'environ 4 mm à environ 6 mm et d'une longueur (312, 322) des ailes (31,32) orientées parallèlement l'une à l'autre d'environ 15 mm à environ 25 mm et d'une largeur (313,323) d'environ 3 mm à environ 5 mm, en particulier d'une largeur (330) de la barrette de liaison (33) d'environ 5 mm ainsi que d'une longueur (312,322) des ailes (31,32) d'environ 20 mm et d'une largeur (313, 323) de ces ailes (31,32) d'environ 4 mm.

3. Procédé selon l'une des revendications 1 ou 2, caractérisé par le fait que l'on fixe aux rubans les ailes (31,32), orientées parallèlement à la bordure longitudinale du ruban (1,2), de l'élément en double T (3) par collage avec les zones de bordure longitudinale (13,14,23,24) des rubans (1,2).

4. Procédé selon l'une des revendications 1 ou 3, caractérisé par le fait que l'on colle les ailes (31,32) de l'élément en double T (3) en plaçant, par-dessus, des rubans adhésifs (70, 71,72,73) guidés le long des zones de bordure longitudinale (13,14,23,24) et qu'on les fixe ainsi aux zones de bordure longitudinale.

5. Procédé selon la revendication 4, caractérisé par le fait qu'après insertion de l'élément intermédiaire (3) on colle, des deux côtés du plan de la bande défini par les rubans (1,2), les zones de bordure longitudinale (13,14,23,24) en plaçant, par-dessus, des rubans adhésifs (70,71,72,73).

6. Procédé selon l'une des revendications 1 à 5, caractérisé par le fait que l'on ne réunit les rubans (1,2) qu'avec des matériaux de liaison transparents à la lumière, en particulier que l'on insère un élément en double T (3) transparent à la lumière et qu'on le fixe sur les zones de bordure longitudinale du ruban avec des rubans adhésifs (70,71,72,73) transparents à la lumière.

7. Procédé selon l'une des revendications 1 ou 2, caractérisé par le fait que l'on fixe aux rubans les ailes (31,32), orientées parallèlement à la bordure longitudinale des rubans, de l'élément en double T (3) par soudage par ultrasons aux zones de bordure longitudinale (13,14,23,24) des rubans (1,2).
